# EUROPEAN PATENT APPLICATION

(11) **EP 1 864 892 A1**
(43) Date of publication of application: **12.12.2007**
(21) Application number: 05727943.2
(22) Date of filing: 30.03.2005
(51) Int. Cl.: B62D 55/253

(54) **CORE BAR FOR RUBBER CRAWLER**

(71) Applicant: Fukuyama Gomu Kogyo Kabushiki Gaisha, Fukuyama-shi, Hiroshima 720-0802 (JP)
(72) Inventor: KIMURA, H., FUKUYAMA GOMU KOGYO KABUSHIKI GAISHA, Fukuyama-shi Hiroshima 7200802 (JP); MORISHITA, S., FUKUYAMA GOMU KOGYO KABUSHI GAISHA, Fukuyama-shi Hiroshima 7200802 (JP)
(74) Representative: Kramer - Barske - Schmidtchen
(86) International application number: PCT/JP2005/006027
(87) International publication number: WO 2006/103753

(57) **Abstract**

A core bar for a rubber crawler capable of enhancing the durability of the rubber crawler by preventing end-cutting phenomenon by cracking generated at the end of the core bar in a crawler lateral direction of the core bar embedded in the rubber crawler when the rubber crawler rides over curbstone at the road shoulder of a paved road and stones and obstacles on an irregular ground and is pressed in a lateral direction. In the core bar (1) constituting the rubber crawler (3) and embedded in a rubber crawler body (3a), an enlargement width part (2) is formed by elongating the longitudinal end part of the core bar (1) to the outside of the width dimension of the core bar.

## Description

### TECHNICAL FIELD

The present invention relates to a rubber crawler for being mounted on an endless track traveling device for farm working machines, construction machines, engineering work machines and industrial vehicles such as transportation vehicles, particularly relates to prevention of end-cutting phenomenon generated on the ends in a lateral direction of a rubber crawler.

### TECHNICAL BACKGROUND

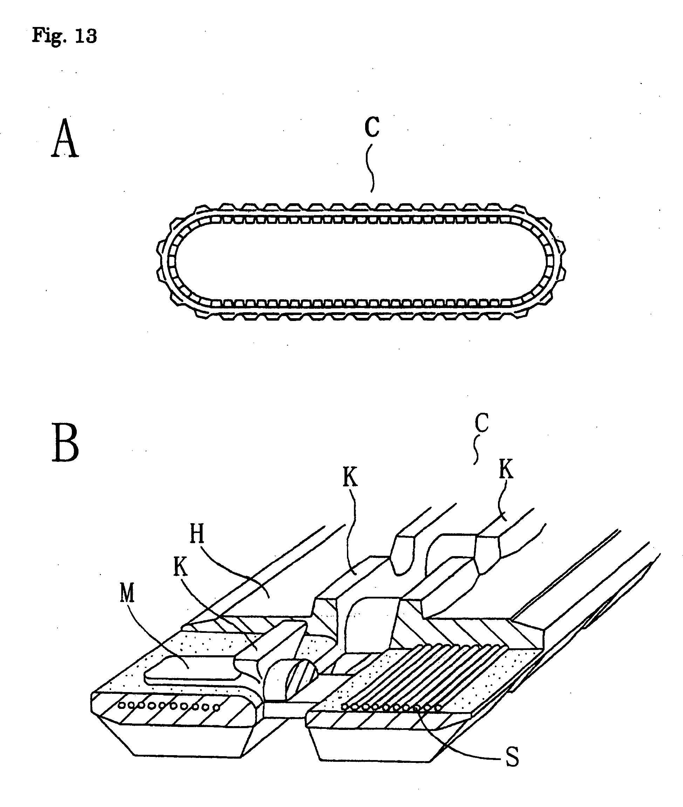

A rubber crawler, in addition to a conventional iron crawler, has been used as an endless track traveling device for mobile construction machine vehicles etc.
A rubber crawler in Fig. 13 shows an example of conventional rubber crawlers. A rubber crawler C comprises an endless belt H formed from a rubber elastic body, core bars M embedded in the belt, and tensile reinforcements S.
A tensile reinforcing layer in which a plurality of tensile reinforcements S are paralleled to a crawler circumferential direction and put side by side in a row within a crawler lateral direction is provided into the endless belt H of a rubber crawler main body. The core bars M are embedded in the inside circumference of the tensile reinforcing layer in the rubber crawler main body, each having guide protrusions K for preventing the crawler from getting out of the traveling device on the inside circumference of the crawler.
Fig. 13A is a side view showing the whole of the rubber crawler C, and Fig. 13B is a perspective view partly in section to explain a structure of the rubber crawler.
Patent Literature No. 1: Japanese patent provisional publication No. 2003-335275
Patent Literature No. 2: Japanese patent provisional publication No. 11-105754

### SUMMARY OF THE INVENTION

### PROBLEMS TO BE SOLVED BY THE INVENTION

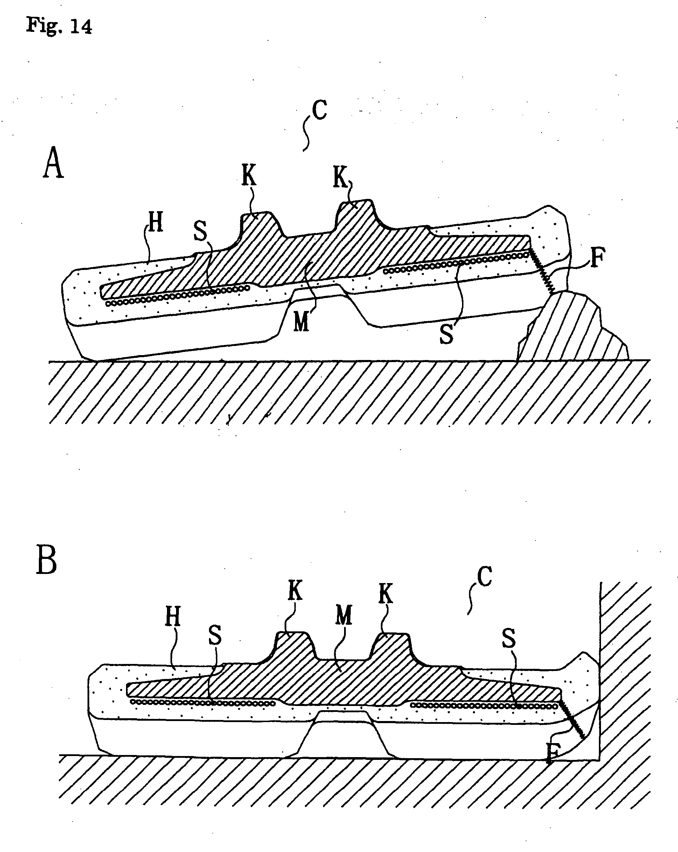

Recently, an industrial construction machine having a traveling device with a rubber crawler has been often used near curbstone at the road shoulder of a paved road and on the irregular ground in which many stones are included. In this case, when the rubber crawler rides over stones, obstacles and the curbstone (see Fig. 14A), or is pressed in the lateral direction (see Fig. 14B), distortion is generated on the end part in a longitudinal direction of the core bar (a crawler lateral direction) embedded in the rubber crawler, and the rubber elastic body in this portion is broadly transformed. When this is repeated, the rubber elastic body is sometimes caused fatigue destruction.
The destruction of the rubber elastic body proceeds whenever such a situation is repeated, and at last, a large crack F will to be generated on the rubber crawler main body. Such a phenomenon is named "end-cutting" and causes troubles.

In case the rubber crawler travels under this situation, the distortion is apt to concentrate at the ends in the width direction of the core bar (the crawler circumferential direction) to bring about cracking rubber when rolling wheels of the traveling device roll from one side to the other side of the crawler circumferential direction on the guide protrusions of the core bars of the rubber crawler.

### MEANS TO SOLVE THE PROBLEM

The present invention aims to settle the above-mentioned problems, namely, improving the concentration of the distortion generated around the longitudinal end parts of the core bar (the crawler lateral direction), taking relieving measures to cope with the distortion, preventing from the end-cutting of the rubber crawler.
The rubber crawler of the invention comprises an endless belt formed from rubber elastic body and so on, a plurality of core bars and tensile reinforcements embedded therein.
The plurality of tensile reinforcements are paralleled to the crawler circumferential direction and put side by side in a row within the crawler lateral direction and embedded in a rubber crawler main body to form a tensile reinforcing layer. The core bars are embedded in the inside circumference of the tensile reinforcing layer in the rubber crawler main body, each having guide protrusions for preventing the crawler from getting out of the traveling device on the inside circumference of the crawler.
The invention aims to relieve the concentration of the distortion generated around the longitudinal end parts of the core bar, and characterized in elongating the longitudinal end parts of the core bar (the crawler lateral direction) to the outside of the width dimension of the core bar (the crawler circumferential direction) to enlarge them in the width direction of the core bar.

In the rubber crawler of the invention, it is preferable that the core bar is provided with partial (preferably than a half of the thickness of the core bar) or overall inclinations toward the tread side of the crawler by diminishing the thickness of the ends of the enlarged core bar toward the external end edge, or the end edges of the core bar are bent to the anti-tread side so that the inclinations face to the tread side.
The core bar in the invention can be used as one for caterpillar band pads of a caterpillar band pad type rubber crawler whose base is composed of connected track links combined a pair of track links, a skeletal part comprising blocks and bars, caterpillar band pads comprising core bars and caterpillar band main body, in addition to an integrated rubber crawler of an endless belt made from rubber elastic body. Therefore, the end-cutting phenomenon can be prevented similarly.

### EFFECT OF THE INVENTION

In the invention, the longitudinal end parts of the core bar (the crawler lateral direction) embedded in the rubber crawler are enlarged in the width direction of the core bar (the crawler circumferential direction) by elongating to the outside of the width dimension of the core bar, thereby diminishing the weight per the unit width (the unit area). According to this, the cut proof can be enhanced. The end-cutting of the rubber crawler is effectively prevented, thereby enhancing the durability of the rubber crawler.

The end-cutting proof is enhanced by facing the broad inclinations of both front and back corneous parts of the end parts in the width direction of the core bar to the tread side. Besides, the durability can be further enhanced by diminishing the thickness of the ends of the width direction of the core bar toward the external end edge as well as by bending them to the anti-tread side so that the inclinations face to the direction of the tread side of the crawler.

### BRIEF DESCRIPTION OF THE DRAWINGS

[Figure 1] Fig. 1 shows a core bar of the first embodiment, Fig. 1A is a plane view of an inside circumference, Fig. 1B is a front view, and Fig. 1C is a side view. (Example 1)
[Figure 2] This is a plane view of an outside circumference showing the state that the core bar of Fig. 1 is embedded in a rubber crawler. (Example 1)
[Figure 3] Fig.3 shows a core bar of the second embodiment, Fig. 3A is a plane view of an inside circumference, Fig. 3B is a front view, and Fig. 3C is a side view. (Example 2)
[Figure 4] This is a sectional view in a width direction of crawler of the rubber crawler. (Example 2)
[Figure 5] Fig. 5A is a sectional view for explaining the state that an end in a lateral direction of the rubber crawler rides over curbstone, and Fig. 5B is a test result of distortion rate when the end in the lateral direction of the rubber crawler rides over the curbstone.
[Figure 6] Fig. 6 shows a core bar of the third embodiment, Fig. 6A is a plane view of an inside circumference, Fig. 6B is a front view, and Fig. 6C is a side view. (Example 3)
[Figure 7] Fig. 7 shows a core bar of the forth embodiment, Fig. 7A is a plane view of an inside circumference, Fig. 7B is a front view, and Fig. 7C is a side view. (Example 4)
[Figure 8] Fig. 8 shows a core bar of the fifth embodiment, Fig. 8A is a plane view of an inside circumference, Fig. 8B is a front view, and Fig. 8C is a side view. (Example 5)
[Figure 9] Fig. 9 shows a core bar of another example of the fifth embodiment, Fig. 9A is a plane view of an inside circumference, Fig. 9B is a front view, and Fig. 9C is a side view. (Another example of Example 5)
[Figure 10] Fig. 10 shows a core bar of the sixth embodiment, Fig. 10A is a plane view of a tread side, Fig. 10B is a longitudinal side view, and Fig. 10C is a side view in width direction. (Example 6)
[Figure 11] Fig. 11 shows a core bar of another example of the sixth embodiment, Fig. 11A is a plane view of a tread side, Fig. 11B is a longitudinal side view, and Fig. 11C is a side view in width direction. (Another example of Example 6)
[Figure 12] Fig. 12 shows the core bar of Fig. 11 embedded in the caterpillar band pad, Fig. 12A is a plane view of a tread side, Fig. 12B is a longitudinal side view, and Fig. 12C is a side view in width direction. (Example 6)
[Figure 13] Fig. 13A is a side view of the whole rubber crawler, Fig. 13B is a partly sectional perspective view for explaining a structure of the rubber crawler. (Conventional example)
[Figure 14] This is a sectional view in the width direction of the rubber crawler, which explains the state that the end-cutting of the rubber crawler is produced. (Conventional view)

### EXPLANATION OF REFERENCED NUMERALS

- 1: a core bar
- 1a: an engaged part
- 1b: a guide protrusion
- 1c: a wing part
- 1d: a protrusion for preventing from coming off
- 2: an enlargement width part
- 2a: a width directional bent part
- 2a': an ogival bent part
- 2b: a longitudinal bent part
- 2c: a navicular bent part
- 3: a rubber crawler
- 3a: a rubber crawler main body (an endless belt)
- 3b: a lug
- 3c: a tensile reinforcement (a steel cord)
- 4: an inclination
- 5: a caterpillar band pad
- 5a: a caterpillar band pad main body
- 5b: a bolt hole
- 6: a core bar
- 6a: an enlargement width part
- 6b: a through hole
- 6c: a bent part

### PREFFERED EMBODIMENT OF THE INVENTION

A rubber crawler of the invention comprises an endless belt forming a rubber crawler main body, plenty of core bars embedded in the belt, and tensile reinforcements.
The belt is made from urethane rubber, thermoplastic resin such as semi hard and soft polyvinyl chloride, or rubber composition (compounded rubber) that reinforcing agent (carbon black, white carbon etc.,) antioxidant, vulcanization accelerator assistant, activator, tackifier, vulcanization accelerator or cross link agent such as sulfur or organic peroxide are blended in natural rubber, synthetic rubber (IR, SBR, BR, NBR, IIR, EPDM etc.,), or original rubber that natural rubber and synthetic rubber are blended.
The tensile reinforcements composed of plenty of steel cords are paralleled to the crawler circumferential direction, put side by side in a row within the crawler lateral direction, and embedded in the belt to form a tensile reinforcing layer.
The core bars are embedded in the crawler of the inside circumference of the tensile reinforcing layer at a fixed interval, and guide protrusions for preventing the crawler from coming off the traveling device are provided to the core bars so as to protrude toward the inside circumference of the crawler.
Besides, generally, a core bar has an engaged part for engaging with a driving unit of the traveling device formed to the longitudinal central portion, the guide protrusions for preventing wheels from coming off formed to the outside sides of the engaged part in the longitudinal direction of the core bar, and wing parts formed to the outside of the guide protrusions. A protrusion for preventing from coming off is occasionally formed to prevent the rubber crawler from shearing laterally.

The core bar of the invention is characterized in that the longitudinal end parts of the wing parts of the core bar are elongated to the outside of the width dimension of the core bar to be broadened in the width direction thereof.
According to the rubber crawler of the invention, when the rubber crawler rides over the stones and the curbstones, the distortion generated on the longitudinal end parts of the core bar is dispersed by embedding the core bars broadened to the width direction in the belt of the rubber crawler main body so that the longitudinal end parts of the wing parts of the core bar are elongated to the outside of the width dimension of the core bar. The rubber destruction can be prevented by relieving the distortion concentration, and the end-cutting can be effectively diminished. Therefore, the durability of the rubber crawler can be enhanced.

In the invention, it is preferable to construct so that the thickness of the end parts of the core bar is diminished toward the external end edges to form inclinations to the tread side of the crawler, and broadened portions of the wing parts of the core bar are bent toward the anti-tread to face the inclinations to the tread side.
Although the inclinations and the bent parts may be provided to either of the end parts in the width directional or in the longitudinal direction of the core bar of the broadened end portions of the core bar, it is preferable to provide to both end parts in the width direction and in the longitudinal direction of the core bar. Besides, they are preferably formed in navicular.
Accordingly, the distortion in both broadened front and rear corneous parts in the width direction of the core bar can be relieved, and besides, the durability against the end-cutting can be enhanced.

### EXAMPLE 1

The embodiment of the invention will be explained with the reference of the drawings.

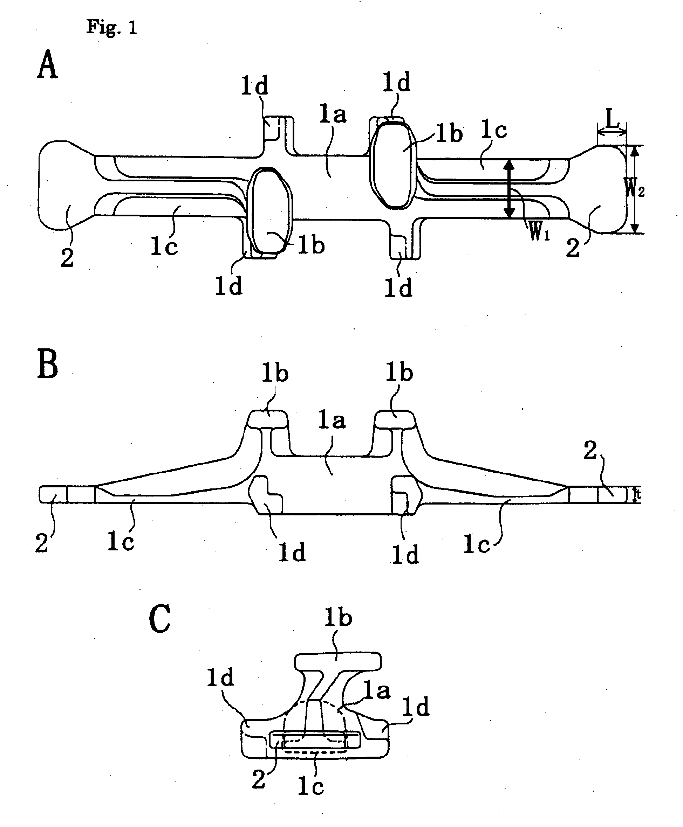

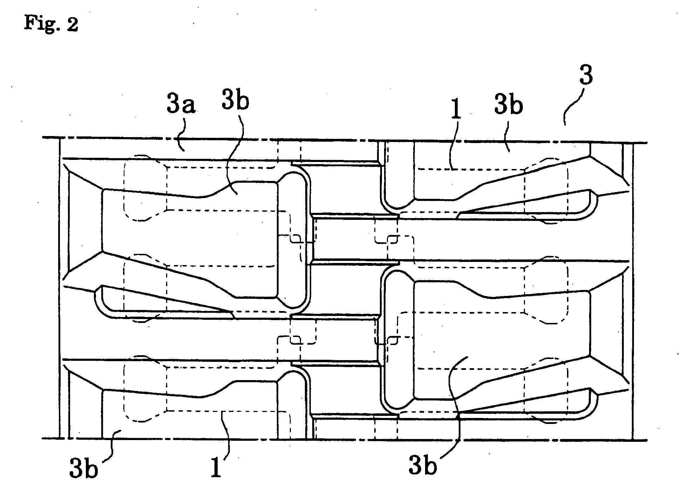

Fig. 1 shows a core bar used in a rubber crawler of the first example, Fig. 1A is a plane view of an inside circumference (anti-tread side), Fig. 1B is a front view, and Fig. 1C is a side view. Fig. 2 is a plane view of an outside circumference showing the state that the core bar of Fig. 1 is embedded in the rubber crawler of the first example.
A core bar 1 of the first example has an engaged part 1a engaging with the drive unit of the traveling device formed to the central part. At both right and left external sides of the engaged part 1a in the longitudinal direction of the core bar, a pair of guide protrusions 1b for preventing wheels from coming off are shifted and arranged in zigzag. Wing parts 1c are formed at both external sides.
Numeral 1d in the figures is a protrusion for preventing from coming off, regulating lateral displacement and torsion of the rubber crawler.
In the core bar 1 of the invention, the longitudinal both end edges of the core bar are made in enlargement width parts 2 longer than the width dimension of the core bar by elongating the tips of the wing parts 1c of the core bar to the outside of the width dimension of the core bar.

The core bar 1 is embedded in a rubber crawler main body 3a of a rubber crawler 3 in Fig. 2. When the core bar 1 is embedded in the rubber crawler, the enlargement width parts 2 are arranged at the end parts in the lateral direction of the rubber crawler. According to this, it is possible to diminish the load per unit width (unit area) of the longitudinal end parts of the core bar, and therefore, the distortion thereof can be dispersed when the rubber crawler rides over the stones and the curbstones. The rubber destruction is prevented by relieving the concentration of the distortion, thereby effectively diminishing the end-cutting phenomenon. Accordingly, the core bar can enhance the durability of the rubber crawler. The numeral 3b is a lug.

In the width dimension W₂ of the enlargement width part 2 of the core bar, although it is effective so that the width is wide, it is necessary to make the width dimension W₂ shorter than the dimension of an interval between the embedded core bars. Because the enlargement width parts interfere with ones of the adjacent core bars when the width dimension is longer than the dimension of the interval between the embedded core bars (one pitch=1P). Besides, the effect decreases in case the width dimension W₂ is too short. Therefore, it is better to make the width dimension W₂ in a range of 1.1 W₁ - 1.8 W₁, preferably 1.2 W₁ - 1.5 W₁. Here, W₁ shows the width dimension of the wing part 1c of the core bar. In the usual rubber crawler, the width dimension W₁ of the wing part 1c is almost made in a half (0.5P) of the dimension of the interval of the embedded core bars.
The length L of the enlargement width part 2 of the core bar can be set up to an adequate dimension in accordance with use conditions. However, if it is too short, the strength of the portion of the enlargement width part elongated than the wing part of the core bar can not be kept. On the contrary, if it is too long, the weight of the core bar is increased and that of the rubber crawler is also increased, and therefore, much material of the core bars is required.

### EXAMPLE 2

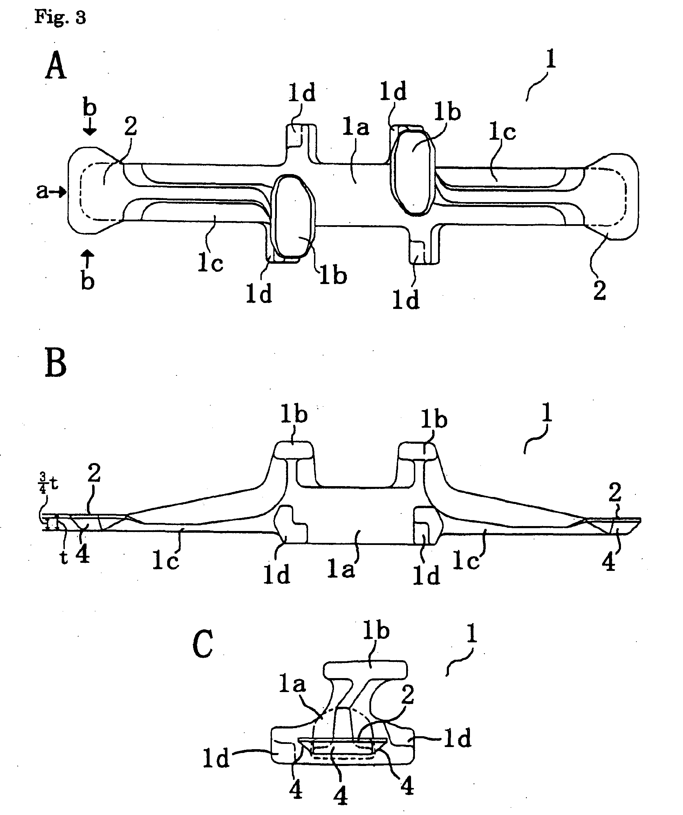

Fig. 3 shows a core bar of the second embodiment of the invention.

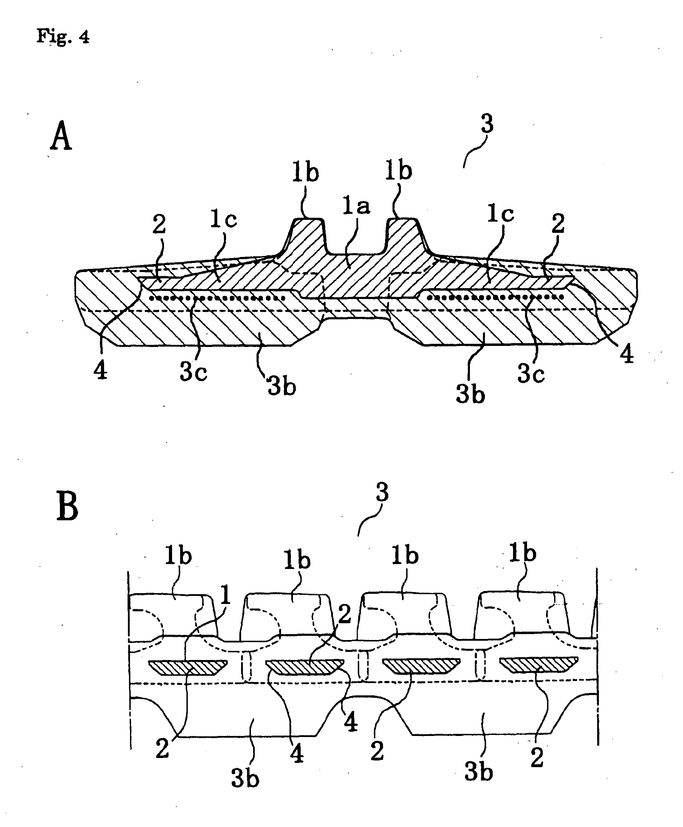

Fig. 3A is a plane view of an inside circumference, Fig. 3B is a front view, and Fig. 3C is a side view. Fig. 4 shows a rubber crawler in which core bars of the second embodiment of the invention are embedded. Fig. 4A is a sectional view in the crawler lateral direction, and Fig. 4B is a partial side view.
The core bar 1 of the second embodiment has the enlargement width parts 2 which the tip range of the wing part 1c of the core bar is longer than the dimension of the central portion of the core bar to the outside of the width dimension of the core bar. Besides, partial or overall inclinations (taper) 4 are formed to the tread sides of the crawler by decreasing the thickness of the core bar in the enlargement width parts 2 toward the external end edges. Here, in case of the partial inclination, the thickness is made in a half of the thickness t (1/2t) or more (3/4t in this example).
In the second embodiment as shown in Fig. 3, it is preferable to form the inclinations 4 to both of a longitudinal end edge part a and width directional end edge parts b of the enlargement width part 2 of the core bar, too. In the invention, however, an inclination 4 may be formed to either of the end edge parts, or the inclinations 4 may have a different angle at each end edge.

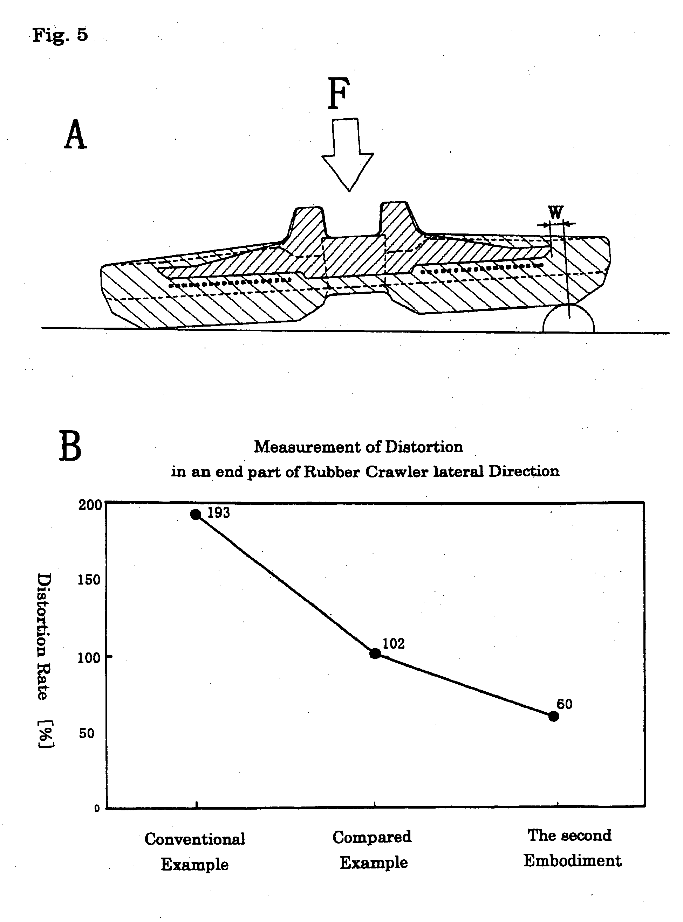

Fig. 5 shows a test method and a test result for measuring the distortion rate when the lateral end parts of the rubber crawler ride over the curbstone, Fig. 5A is a sectional view for showing the test method, and Fig. 5B is a graph for showing the test result of the distortion rate.
A level of the distortion testing is measured for the rubber crawler of the second embodiment, a general rubber crawler shown in Fig. 13 as a conventional example, and a rubber crawler disclosed in Figs. 5 to 7 of Japanese Patent Laid-open Application No. 11-105754 in which core bars (bent part is formed at the tip end of the longitudinal end part of the core bar) taking conventional measures to meet the end-cutting are embedded as a comparative example.
As shown in Fig. 5A, the distortion rate is measured when a semicircular obstacle is put right below the position by the distance W (10mm) apart from the position of the longitudinal end part of the core bar and the load F (500 Kg) is weighed on the core bar.
As shown in the graph, the distortion rate of the conventional rubber crawler is 193 %, that of the rubber crawler of the comparative example is 102 %, and on the contrary, that of the rubber crawler of the second embodiment is 60 %, which is one third of the conventional example and smaller than in comparison with the comparative example.
According to the invention, the distortion of the end part of the rubber crawler in the lateral direction, which is generated when the rubber crawler rides on a foreign substance, is remarkably improved in comparison with the conventional rubber crawler and a rubber crawler using the conventional end-cutting countermeasure, thereby diminishing the end-cutting generated on the rubber crawler as well as enhancing the durability.

### EXAMPLE 3

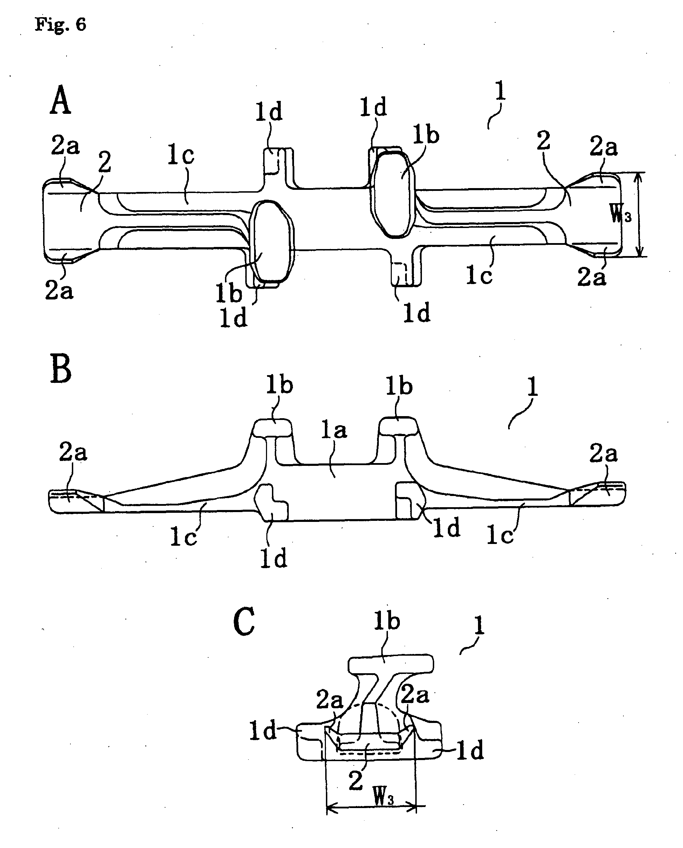

Fig. 6 shows a core bar of the third embodiment of the invention, Fig. 6A is a plane view of an inside circumference, Fig. 6B is a front view, and Fig. 6C is a side view.
The core bar 1 of the third embodiment is so constructed that the enlargement width parts 2 are formed by elongating the tip end parts of the wing parts 1c of the core bar to the outside of the width dimension of the core bar, bent parts 2a are formed by bending the elongated portions of the core bar in the enlargement width parts 2 to the direction of the inside circumference of the crawler, and the end edge parts of the core bar in the crawler circumferential direction are bent so that inclinations formed by bending face to the tread side.
In this case, since the enlargement width parts 2 are bent, the bent parts 2a are apart from steel cords of a base point for winding of the rubber crawler to the inside circumference. Therefore, unless the width dimension W₃ of the core bar is made shorter than the interval between the embedded core bars (1P), the enlargement width parts 2 of the adjacent core bars are interfered with each other, and the rubber crawler can not wing round an idler wheel and a driving wheel of the traveling device.
That is, it is necessary to make the width dimension W₃ of the core bar shorter than the dimension obtained by subtracting an interval (p) that the enlargement width parts 2 are not interfered with each other from the interval between the embedded core bars (1P) (W₃< 1P-p).
Besides, the interval p is formulated in p=2h · sin(180/n)° when the dimension from the steel cords to the tip end of the inside circumference of the bent part 2a of the enlargement width part 2 is "h" and the number of teeth of the driving wheel is "n".

### EXAMPLE 4

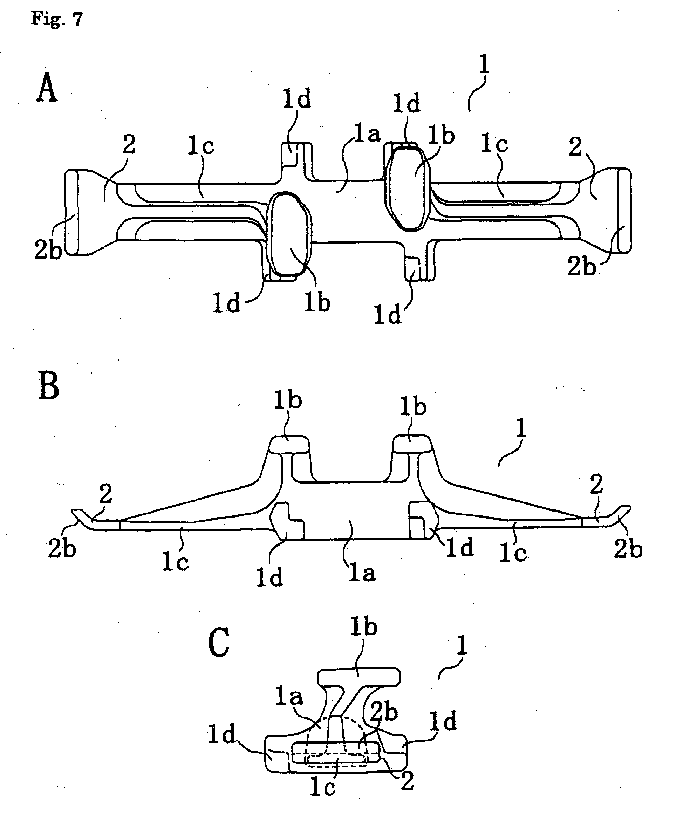

Fig. 7 shows a core bar of the forth embodiment of the invention, Fig. 7A is a plane view of an inside circumference, Fig. 7B is a front view, and Fig. 7C is a side view.
The core bar 1 of the forth embodiment is so constructed that the enlargement width parts 2 are formed by elongating the tip end parts of the wing parts 1c of the core bar to the outside of the width dimension of the core bar, bent parts 2b are formed by bending the longitudinal end parts of the enlargement width parts 2 of the core bar to the direction of the inside circumference of the crawler, and the end edge parts of the core bar in the crawler lateral direction are bent so that inclinations formed by bending face to the tread side.

### EXAMPLE 5

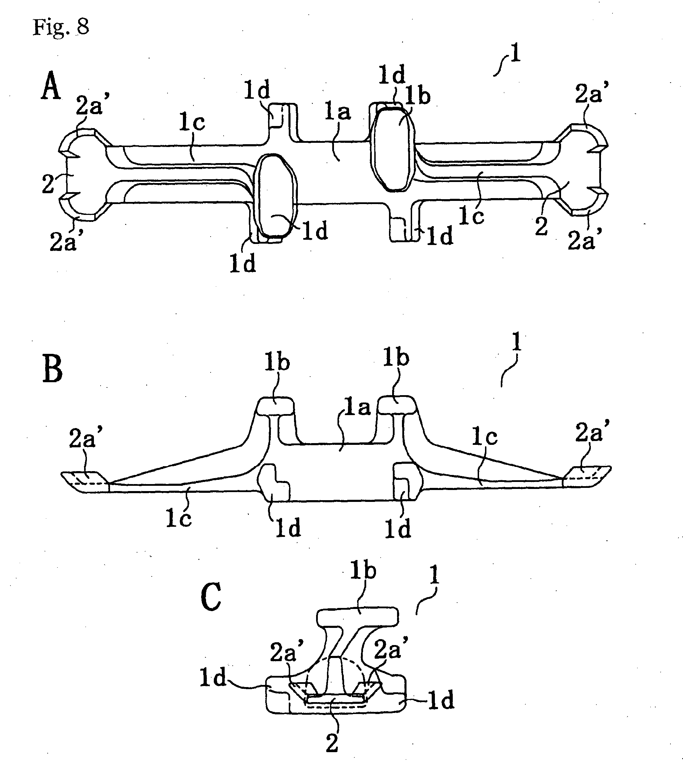

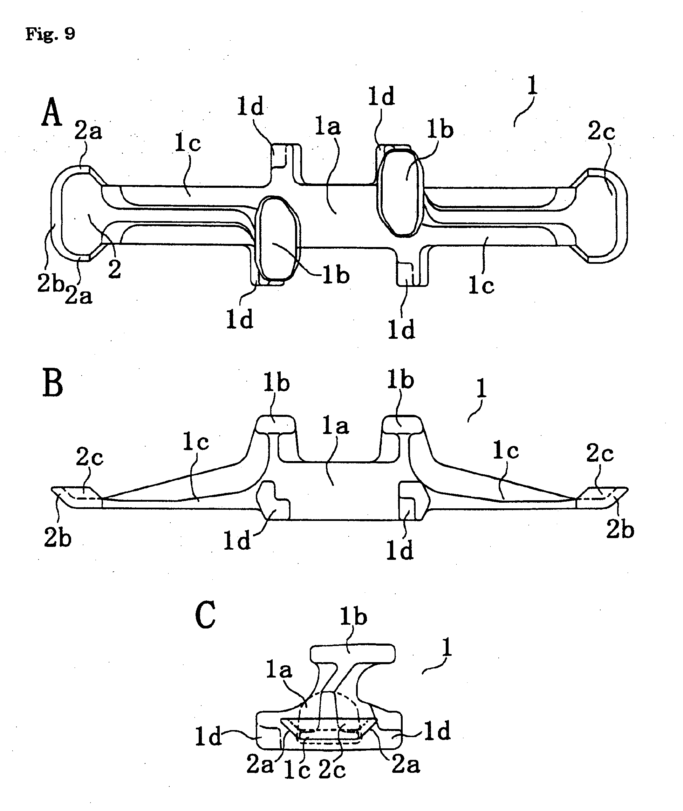

Fig. 8 show a core bar of the fifth embodiment of the invention, Fig. 8A is a plane view of an inside circumference, Fig. 8B is a front view, and Fig. 8C is a side view.
The core bar 1 of the fifth embodiment is so constructed that the enlargement width parts 2 are formed by elongating the tip end parts of the wing parts 1c of the core bar to the outside of the width dimension of the core bar, and ogival bent parts 2a' are formed by bending the longitudinal tip end parts of the core bar of the enlargement width parts 2 to the direction of the inside circumference of the crawler as well as bending parts from the corneous parts in the width direction of the core bar to a part of the longitudinal tip end part of the core bar.
Accordingly, the distortion of both front and rear corneous parts in the width direction of the core bar can be relived, and the durability against the end-cutting can be enhanced.
In this case, as shown in Fig. 9, a navicular bent part 2c may be formed by bending the whole longitudinal tip end part of the core bar of the enlargement width part 2 so as to be connected to bent parts formed on the both ends in the width direction of the core bar, namely by bending the end edge parts of the core bar in the crawler longitudinal direction, the crawler width direction and the corner parts thereof so that the tip end parts of the wing parts 1c of the core bar are formed in navicular shape.

### EXAMPLE 6

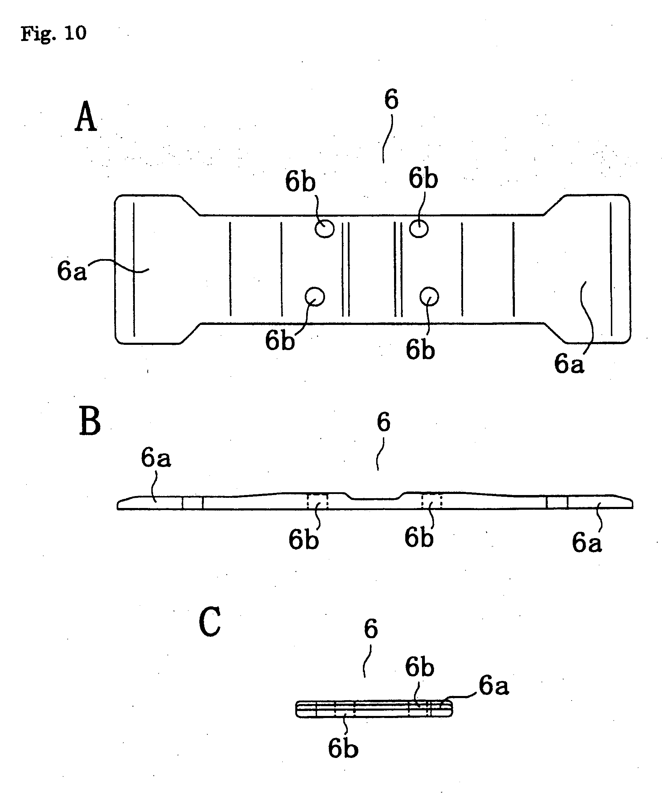

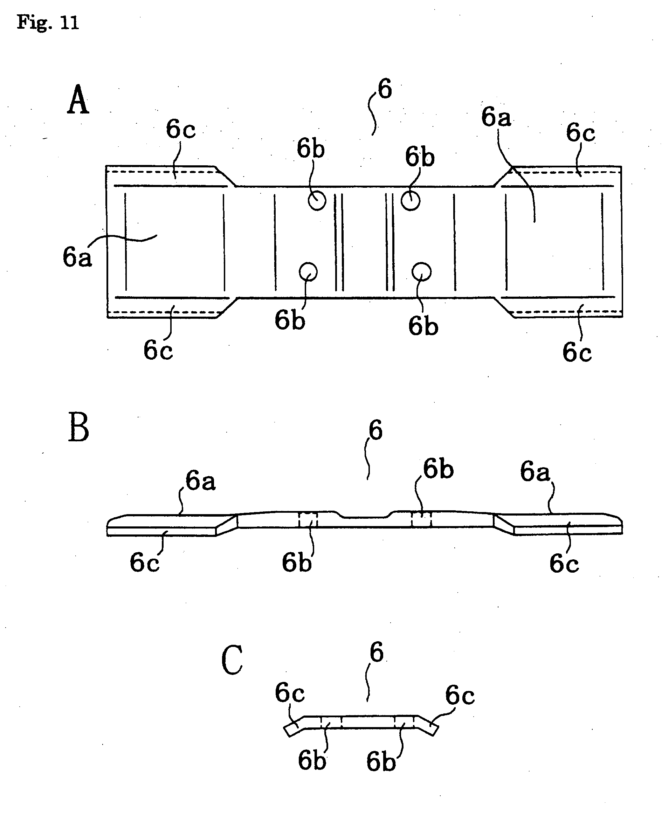

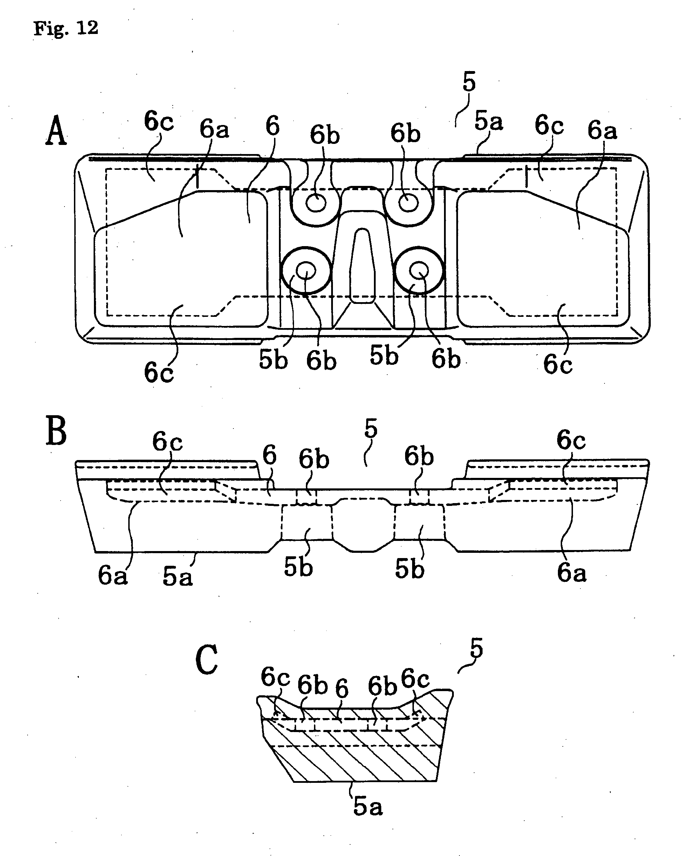

Figs. 10 and 11 show a core bar for a connected links type rubber crawler of a caterpillar band pad type rubber crawler in which caterpillar band pads are fitted to connected track links that a pair of track links are endlessly connected. Fig. 10 shows a core bar of the sixth embodiment, Fig. 10A is a plane view of a tread side, Fig. 10B is a longitudinal side view, and Fig. 10C is a side view in width direction. Fig. 11 shows a core bar of another example of the sixth embodiment, Fig. 11A is a plane view of a tread side, Fig. 11B is a longitudinal side view, and Fig. 11C is a side view in width direction. Fig. 12 shows a caterpillar band pad of the connected links type rubber crawler in which the core bars of another example of the sixth embodiment shown in Fig. 11, Fig. 12A is a plane view of a tread side, Fig. 12B is a longitudinal side view, and Fig. 12C is a side view in width direction.
A core bar 6 of the sixth embodiment shown in Fig. 10 is so constructed that enlargement width parts 6a are formed by elongating the longitudinal end parts of the core bar to the outside of the width dimension of the core bar. In figure, 6b is a through hole in which a bolt for fitting the caterpillar band pad to the connected track links is inserted.
Besides, in the core bar 6 of another example of the sixth embodiment shown in Fig. 11, the enlargement width parts 6a are formed by elongating the longitudinal end parts of the core bar to the outside of the width dimension of the core bar, bent parts 6c are formed by bending the broadened portions of the enlargement width parts 6a to the direction of the inside circumference (the anti-tread side) of the crawler, and the end edge parts of the core bar in the crawler circumferential direction are bent so that the inclinations formed by bending face to the tread side.
In Fig. 12, the core bar 6 (crawler) of another example of the sixth embodiment shown in Fig. 6 is embedded in the caterpillar band pad 5 of the connected links type rubber crawler of a caterpillar band pad type rubber crawler which caterpillar band pads are fitted to the connected track links (not-illustrated) that a pair of track links are endlessly connected. A caterpillar band pad main body 5a of the caterpillar band pad 5 is formed from rubber elastic body, and therein, the core bar 6 is embedded.
In figure, 5b is a bolt hole in which a bolt for fitting the caterpillar band pad to the connected track links.

## Claims

1. A core bar for rubber crawler, constituting a rubber crawler, embedded in a rubber crawler main body made of rubber elastic body,
wherein enlargement width parts are formed by elongating longitudinal end parts of the core bar to the outside of the width dimension of the core bar.

2. A core bar for rubber crawler as claimed in claim 1, wherein the thickness of the enlargement width parts is diminished toward the external end edge, and partial or overall inclinations are formed to an tread side of the crawler.
